# EUROPÄISCHE PATENTSCHRIFT

(11) **EP 2 935 004 B1**
(45) Veröffentlichungstag und Bekanntmachung des Hinweises auf die Patenterteilung: **28.03.2018**
(21) Anmeldenummer: 13830205.4
(22) Anmeldetag: 18.12.2013
(51) Int. Cl.: B64D 5/00

(54) **HILFSVORRICHTUNG FÜR HOCHFLIEGENDES FLUGZEUG**
AUXILIARY PLATFORM FOR HIGH ALTITUDE AIRCRAFT
DISPOSITIF AUXILIAIRE POUR AÉRONEF VOLANT À HAUTE ALTITUDE

(30) Priorität: 20.12.2012 DE 102012025026
(43) Veröffentlichungstag der Anmeldung: 28.10.2015
(73) Patentinhaber: Airbus Defence and Space GmbH, 85521 Ottobrunn (DE)
(72) Erfinder: KIEFER, Andreas, 83607 Holzkirchen (DE); FEDERHEN, Jens, 81667 München (DE); DRAGON, Dieter, 86551 Aichach (DE); SCHOLZ, Werner, 73275 Ohmden (DE)
(74) Vertreter: Schicker, Silvia
(86) Internationale Anmeldenummer: PCT/DE2013/000799
(87) Internationale Veröffentlichungsnummer: WO 2014/094712

(56) Entgegenhaltungen:
- WO-A1-98/10985
- WO-A1-02/076826
- AU-A4- 2009 100 967
- "stratolaunch rockets towards lift-off", FLIGHT INTERNATIONAL, REED BUSINESS INFORMATION, SUTTON SURREY, GB, Bd. 181, Nr. 5332, 13. März 2012 (2012-03-13), Seite 23, XP001573011, ISSN: 0015-3710

## Beschreibung

Die Erfindung betrifft eine Hilfsvorrichtung für ein hochfliegendes Flugzeug, insbesondere für eine sogenannte Stratosphären-Plattform (englisch: High-Altitude Platform System, HAPS). Solche Flugzeuge steigen in die Stratosphäre auf, um dort während einer im Vergleich zu konventionellen Flugzeugen langen Zeitspanne ähnliche Aufgaben wahrzunehmen wie Satelliten. Unter einer langen Zeitspanne sind hierbei mehrere Wochen bis hin zu Monaten oder sogar Jahren zu verstehen. Als Stratosphäre wird die vom Erdboden aus gesehen zweite Schicht der Erdatmosphäre bezeichnet, die in einer Höhe zwischen ungefähr 8 Kilometern an den geographischen Polen und circa 18 km am Äquator beginnt und etwa bis in eine Höhe 50km reicht. Eine typische Flughöhe für eine Stratosphären-Plattform beträgt 20 km. Die von derartigen Flugzeugen wahrgenommenen Aufgaben erstrecken sich beispielsweise auf Erdbeobachtung oder Kommunikationsfunktionen.

Solche hochfliegenden Flugzeuge werden häufig solarelektrisch angetrieben, wobei eine Batterie des Flugzeugs tagsüber mit Hilfe von Solarzellen aufgeladen und während der Nacht zum Betrieb des Flugzeugs entladen wird. Diese Art des Antriebs setzt derzeit enge Grenzen im Hinblick auf die zur Verfügung stehende elektrische Leistung und damit auch auf das erlaubte Gewicht des Flugzeugs. Bei der Auslegung derartiger Flugzeuge werden daher ein möglichst geringes Gesamtgewicht und ein möglichst guter Wirkungsgrad angestrebt.

Der Aufstieg des Flugzeugs in die Stratosphäre stellt besondere Anforderungen an die Konstruktion des Flugzeugs. Während dieser Phase treten die größten mechanischen Belastungen auf das Flugzeug auf. Darüber hinaus wird für den Anstieg die höchste Motorleistung benötigt.

Ein Transportmittel zum Transportieren von Lasten, wie beispielsweise Raketen, Satelliten, Nutzlasten oder Raumfahrzeugen, ist aus dem Dokument AU 2009 100 967 A4 bekannt. Dabei umfasst das Transportmittel eine Mehrzahl hohler Strukturen, die ein geringeres Gewicht als die Umgebungsluft aufweisen, um die Lasten zu transportieren.

Ferner offenbart das Dokument WO 98/10985 A1 ein Umlaufbahn-Startsystem mit einem dreistufigen Fluggerät zum Befördern einer Last in die Erdumlaufbahn. Die drei Stufen des Fluggeräts umfassen ein Zweistromtriebwerk-Flugzeug, ein mittels eines Staustrahltriebwerks betriebenes Raumfahrzeug und eine Antriebsrakete.

Der Artikel "stratolaunch rockets towards lift-off" beschreibt ein Leichtbauflugzeug zum Starten von Raketen und anderen Nutzlasten zur Verwendung in der Erdumlaufbahn.

Des Weiteren offenbart das Dokument WO 02/076826 A1 ein System zum Starten, Auftanken und Abfangen eines Flugzeugs in der Luft mittels eines Trägerflugzeugs. Es ist Aufgabe der vorliegenden Erfindung, den Betrieb eines hochfliegenden Flugzeugs sowohl während des Aufstiegs in die Stratosphäre als auch während des Betriebs in der Stratosphäre baulich und/oder funktional zu optimieren.

Diese Aufgabe wird gelöst durch eine Hilfsvorrichtung gemäß den Merkmalen des Patentanspruches 1. Vorteilhafte Ausgestaltungen ergeben sich aus den abhängigen Patentansprüchen.

Die Erfindung schafft eine Hilfsvorrichtung für ein hochfliegendes Flugzeug, die einen von dem Flugzeug unabhängigen Antrieb für den Aufstieg des mit der Hilfsvorrichtung lösbar gekoppelten Flugzeugs in die Stratosphäre umfasst und spätestens beim Erreichen einer vorbestimmten Missionshöhe von dem Flugzeug lösbar ist.

Diesem Vorschlag liegt die Überlegung zu Grunde, dass bei einem herkömmlichen hochfliegenden Flugzeug, welches den Aufstieg in die Stratosphäre unter Nutzung seines eigenen Flugzeugantriebs vornimmt, während der im Vergleich zur Dauer des Aufstiegs (einige Stunden) sehr langen Missionsdauer (mehrere Wochen oder sogar Monate) das Fluggerät mehr Masse mitführt als nötig und der Flugzeugantrieb für die eigentliche Mission überdimensioniert ist. Durch die vorgeschlagene Hilfsvorrichtung kann dieses Problem umgangen werden, indem die Hilfsvorrichtung vor dem Start des Flugzeugs mit diesem lösbar verbunden wird und in einer vorgegebenen Flughöhe wieder von dem Flugzeug getrennt wird. Die Hilfsvorrichtung fliegt damit "huckepack" mit dem Flugzeug mit.

Die Ausgestaltung des Flugzeugs kann hierdurch optimal an den Einsatzzweck in der Stratosphäre angepasst werden. Insbesondere braucht der Flugzeugantrieb des Flugzeugs lediglich an den Betrieb in der Stratosphäre angepasst werden. Hierdurch kann das Flugzeug nicht nur im Hinblick auf das Gewicht optimiert werden, sondern der im Vergleich kleinere Antrieb kann auch wesentlich preiswerter bereitgestellt werden.

Die Hilfsvorrichtung kann wahlweise auf und/oder unter dem Flugzeug oder an dessen Seiten angeordnet sein. Eine Anordnung unter dem Flugzeug ist bevorzugt, da nach dem Lösen der Hilfsvorrichtung von dem Flugzeug dieses alleine basierend auf Schwerkraftwirkung von dem hochfliegenden Flugzeug getrennt werden kann.

Der Antrieb der Hilfsvorrichtung kann in einer Ausgestaltung nicht-elektrischer Art sein. Insbesondere kann der Antrieb ein Verbrennungsmotor sein, wobei dann ein für den Betrieb erforderlicher Treibstoff in einem Reservoir der Hilfsvorrichtung gespeichert bzw. enthalten ist. In einer alternativen Ausgestaltung kann der Antrieb auch einen Elektromotor umfassen, welcher aus einem Energiespeicher der Hilfsvorrichtung gespeist wird. Bei dem Energiespeicher handelt es sich wahlweise um eine Batterie oder einen wieder aufladbaren Akkumulator.

An der Hilfsvorrichtung kann in einer weiteren Ausgestaltung ein Mittel zur Stabilisierung beim Aufstieg in die Stratosphäre vorgesehen sein. Insbesondere kann ein solches Stabilisierungsmittel einen oder mehrere steuerbare Flügel und/oder einen steuerbaren Hilfsantrieb und/oder eine Richtungsänderungsanordnung (im Sinne einer Lenkung) für den Antrieb umfassen. Das Stabilisierungsmittel sorgt nicht nur für zusätzliche Stabilität im Hinblick auf die Fluglage, sondern kann auch besondere mechanische Belastungen beim Aufstieg in die Stratosphäre des Flugzeugs aufnehmen und damit von dem Flugzeug fernhalten.

Gemäß einer weiteren vorteilhaften Ausgestaltung ist die Hilfsvorrichtung wiederverwendbar ausgebildet und verfügt über Mittel, um unabhängig vom Flugzeug zur Erde zurückehren zu können. Diese können beispielsweise einen ungesteuerten Fallschirm, einen gesteuerten Gleitschirm oder steuerbare Flügel umfassen. Beispielsweise kann die Hilfsvorrichtung in Gestalt eines Flugzeugs ausgebildet sein, so dass dieses nach der Trennung von dem Flugzeug segelnd und/oder unter weiterer Nutzung der Antriebskraft seines Antriebs zur Erde zurückkehren kann. Hierdurch wird die mehrfache Verwendung der Hilfsvorrichtung möglich.

In einer weiteren Ausgestaltung ist die lösbare Kopplung zu dem Flugzeug mittels einer an der Hilfsvorrichtung und/oder dem Flugzeug angeordneten Kopplungseinrichtung bewerkstelligt. Die lösbare Kopplung kann mechanischer oder elektromechanischer oder elektromagnetischer Art sein, wobei auch Kombinationen der genannten Varianten möglich sind.

Um den Aufstieg des hochfliegenden Flugzeugs mittels der Hilfsvorrichtung in die Stratosphäre bewerkstelligen zu können, weist der Antrieb der Hilfsvorrichtung eine größere Leistung als ein vorzugsweise solarelektrischer Flugzeugantrieb des Flugzeugs auf. Insbesondere kann der Antrieb derart ausgestaltet sein, dass durch dessen alleinigen Betrieb der Aufstieg von Hilfsvorrichtung und mit diesem gekoppelten Flugzeug in die Stratosphäre ermöglicht wird. Der Antrieb der Hilfsvorrichtung kann aber auch derart bemessen sein, dass dieser zusammen mit dem Flugzeugantrieb des Flugzeugs derart dimensioniert ist, dass deren Antriebe zusammen die erforderliche Leistung für den Aufstieg in die Stratosphäre bereitstellen. Insbesondere weist der Antrieb der Hilfsvorrichtung eine an den Aufstieg in die vorbestimmte Höhe angepasste Leistung auf.

Die Erfindung wird nachfolgend näher anhand eines Ausführungsbeispiels in der Zeichnung erläutert. Es zeigen:
- Fig. 1: eine erfindungsgemäße Hilfsvorrichtung, welche an einem hochfliegenden Flugzeug befestigt ist, und
- Fig. 2: eine schematische Darstellung der von dem Flugzeug nach Erreichen einer vorgegebenen Missionshöhe gerade abgetrennten Hilfsvorrichtung.

Das nachfolgend beschriebene Ausführungsbeispiel einer erfindungsgemäßen Hilfsvorrichtung 20 für ein hochfliegendes Flugzeug 10 beruht auf der Überlegung, dass während des Aufstiegs eines hochfliegenden Flugzeugs mehr Leistung benötigt wird als nach dem Erreichen einer vorbestimmten Missionshöhe in der Stratosphäre während der eigentlichen Mission. Während des Aufstiegs würde bei einem herkömmlichen Flugzeug somit ein größerer und schwererer Antrieb benötigt als während der eigentlichen Mission. Dies hätte zur Folge, dass der Antrieb während der Mission zum Teil als unnötige, tote Masse anzusehen ist. Weiterhin kann er nicht im Bereich seines besten Wirkungsgrades betrieben werden. Dies ist umso problematischer, als die Dauer einer Mission des Flugzeugs im Vergleich zum Aufstieg sehr lang ist. Die Missionsdauer kann ohne weiteres mehrere Monate betragen, während der Aufstieg in die Stratosphäre in einigen Stunden möglich ist.

Das Grundprinzip der vorliegenden Erfindung besteht darin, während des Aufstiegs des Flugzeugs 10 eine Hilfsvorrichtung 20 mit eigenem Antrieb 21 zu verwenden, welche dann beim Erreichen der vorbestimmten Missionshöhe oder einem anderen beliebigen, geeigneten Zeitpunkt, von dem Flugzeug 10 getrennt wird und zum Boden zurückkehrt.

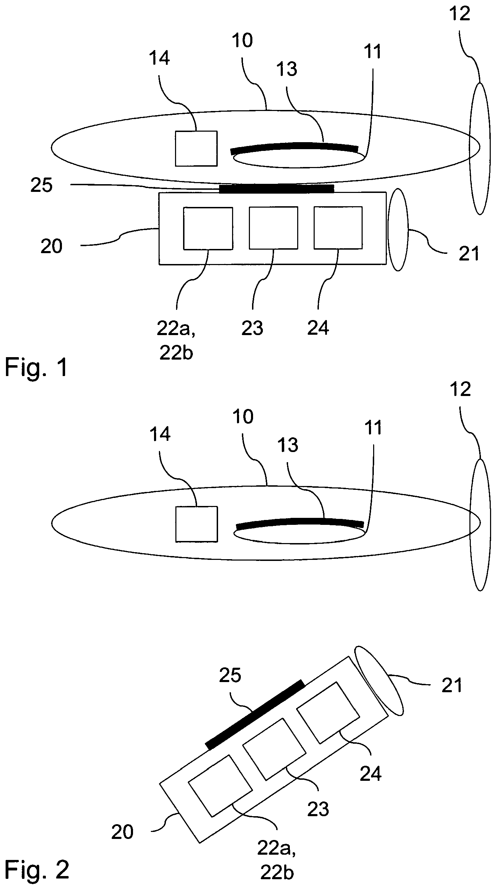

Fig. 1 zeigt in einer schematischen Darstellung eine Hilfsvorrichtung 20, die mit einem hochfliegenden, Flugzeug 10 über eine Kopplungseinrichtung 25 lösbar gekoppelt ist.

Das Flugzeug 10 umfasst einen solarelektrischen Antrieb 12 (nachfolgend auch als Flugzeugantrieb bezeichnet), der wahlweise von Solarzellen 13 oder aus einem Energiespeicher 14 des Flugzeugs 10 gespeist werden kann. Lediglich beispielhaft sind die Solarzellen 13 auf Flügeln 11 des schematisch dargestellten Flugzeugs 10 angeordnet. Das Flugzeug umfasst weitere, nicht dargestellte Mittel, um Aufgaben zur Erdbeobachtung und/oder Telekommunikation und dergleichen zu erfüllen. Der solarelektrische Antrieb 12 ist dazu ausgebildet, lediglich in einer vorbestimmten Missionshöhe, d.h. einer Höhe zwischen 15 und 25 km, den Betrieb des Flugzeugs 10 über die vorgesehene Zeitdauer (Missionsdauer) sicherzustellen. Für diesen Einsatzzweck kann der Flugzeugantrieb optimiert sein. Die Antriebsleistung des solarelektrischen Antriebs 12 alleine würde daher auch nicht ausreichen, das Flugzeug 10 vom Boden in die vorgegebene Missionshöhe zu befördern.

Diese Aufgabe wird von der Hilfsvorrichtung 20 erfüllt. Diese verfügt über einen separaten Antrieb 21, welcher eine Leistung aufweist, die die Hilfsvorrichtung 20 zusammen mit dem Flugzeug 10 in die vorgegebene Missionshöhe befördern kann. Spätestens beim Erreichen der vorbestimmten Missionshöhe oder einem anderen geeigneten Zeitpunkt kann die Hilfsvorrichtung 20 durch entsprechende Aktuierung der Kopplungseinrichtung 25 von dem Flugzeug 10 gelöst werden, so dass sich diese - wie in Fig. 2 dargestellt - in Schwerkraftrichtung Richtung Erde bewegt.

Der Antrieb 21 der Hilfsvorrichtung 10 kann beispielsweise als nicht-elektrischer Antrieb ausgebildet sein. Insbesondere kommen Verbrennungsmotoren in Betracht, wobei ein für den Betrieb erforderlicher Treibstoff in einem Reservoir 22a der Hilfsvorrichtung gespeichert ist. Ebenso kann der Antrieb auch als Elektroantrieb ausgebildet sein. In diesem Fall ist anstelle des Treibstoffreservoirs 22a ein Energiespeicher 22b in Form einer Batterie oder eines Akkumulators in der Hilfsvorrichtung 20 vorgesehen.

Für die sichere und/oder kontrollierte Rückkehr der Hilfsvorrichtung 20 zum Boden sind verschiedene Alternativen möglich. Eine Zerstörung der Hilfsvorrichtung 20 wird im einfachsten Fall bereits durch einen einfachen, ungesteuerten Fallschirm vermieden. Ebenso könnten gesteuerte Gleitschirme zur sicheren Landung der Hilfsvorrichtung 20 eingesetzt werden. Eine weitere Variante bestünde darin, die Hilfsvorrichtung 20 in Gestalt eines kleinen Flugzeugs auszubilden, so dass diese unter Nutzung ihres eigenen Antriebs 21 und/oder segelnd unabhängig vom Flugzeug zum Boden zurückkehren könnte. Hierbei ist dann auch eine Steuerung der Hilfsvorrichtung möglich. Eine entsprechende Rückkehrvorrichtung ist schematisch mit dem Bezugszeichen 24 gekennzeichnet.

Mit dem Bezugszeichen 23 ist ein Stabilisierungsmittel gekennzeichnet, das die Fluglage der Hilfsvorrichtung 20 und des Flugzeugs 10 beim Aufstieg in die Stratosphäre stabilisiert. Hierbei kann es sich insbesondere um einen oder mehrere steuerbare Flügel und/oder einen steuerbaren Hilfsantrieb und/oder eine Richtungsänderungsanordnung für den Antrieb 21 handeln. Das Stabilisierungsmittel 23 sorgt für eine zusätzliche Stabilität im Hinblick auf besondere mechanische Belastungen während des Aufstiegs in die Stratosphäre. Hierdurch können auf das Flugzeug 10 wirkende Belastungsspitzen während des Aufstiegs in die Stratosphäre vermindert werden.

Die Nutzung der vorgeschlagenen Hilfsvorrichtung, welche "huckepack" unter oder auch wahlweise auf dem Flugzeug 10 mitfliegt, ermöglicht eine Gewichtsersparnis des Flugzeugs 10. Darüber hinaus kann das Flugzeug 10 gezielt im Hinblick auf die durchzuführende Mission ausgelegt werden. Eine Auslegung im Hinblick auf die Aufstiegsphase ist nicht erforderlich. Insbesondere kann der Flugzeugantrieb 12 derart dimensioniert werden, dass er während seiner Mission mit optimalem Wirkungsgrad betrieben werden kann.

Im Gegensatz zu einer Anordnung, in der das Flugzeug "huckepack" auf einem Trägerflugzeug oder einem anderen Fluggerät (Luftschiff, Wetterballon) lösbar angeordnet ist, lässt sich das vorgeschlagene Konzept mit weniger Aufwand und geringeren Kosten realisieren.

In der vorliegenden Beschreibung wurde ein Flugzeug stellvertretend für eine Stratosphären-Plattform beschrieben. Der Begriff "Flugzeug" ist weit zu interpretieren. Insbesondere braucht das Flugzeug nicht zwingend die typische Gestalt eines Flugzeugs aufzuweisen. Die Ausgestaltung kann vielmehr in beliebiger Weise erfolgen, so dass diese dazu geeignet ist, in der Stratosphäre die auferlegte Aufgabe zu erfüllen.

### BEZUGSZEICHENLISTE

- 10: Flugzeug (10)
- 11: Flügel
- 12: Flugzeugantrieb
- 13: Solarzelle
- 14: Energiespeicher

- 20: Hilfsvorrichtung
- 21: Antrieb
- 22a: Energiespeicher
- 22b: Treibstoffreservoir
- 23: Mittel zum Stabilisieren der Fluglage
- 24: Rückkehrvorrichtung
- 25: Kopplungseinrichtung

## Patentansprüche

1. Hilfsvorrichtung für ein hochfliegendes Flugzeug (10), wobei die Hilfsvorrichtung einen von dem Flugzeug (10) unabhängigen Antrieb (21) umfasst und spätestens beim Erreichen einer vorbestimmten Missionshöhe von dem Flugzeug (10) lösbar ist, und wobei
der Antrieb (21) ein Verbrennungsmotor ist und ein für den Betrieb erforderlicher Treibstoff in einem Reservoir (22a) der Hilfsvorrichtung (20) gespeichert ist; oder
der Antrieb (21) einen Elektromotor umfasst, welcher aus einem Energiespeicher (22b) der Hilfsvorrichtung (22) gespeist wird; **dadurch gekennzeichnet, dass** der unabhängige Antrieb (21) für den Aufstieg des mit der Hilfsvorrichtung (20) lösbar gekoppelten Flugzeugs (10) in die Stratosphäre geeignet ist.

2. Hilfsvorrichtung nach Anspruch 1, **dadurch gekennzeichnet, dass** die Hilfsvorrichtung auf und/oder unter dem Flugzeug (10) angeordnet ist.

3. Hilfsvorrichtung nach einem der vorhergehenden Ansprüche, **dadurch gekennzeichnet, dass** diese ein Mittel (23) zur Stabilisierung der Fluglage beim Aufstieg in die Stratosphäre umfasst, insbesondere einen oder mehrere steuerbare Flügel und/oder einen steuerbaren Hilfsantrieb und/oder eine Richtungsänderungsanordnung für den Antrieb (21).

4. Hilfsvorrichtung nach einem der vorhergehenden Ansprüche, **dadurch gekennzeichnet, dass** diese wiederverwendbar ist.

5. Hilfsvorrichtung nach einem der vorhergehenden Ansprüche, **dadurch gekennzeichnet, dass** diese einen ungesteuerten Fallschirm oder einen gesteuerten Parasail oder steuerbare Flügel umfasst.

6. Hilfsvorrichtung nach einem der vorhergehenden Ansprüche, **dadurch gekennzeichnet, dass** die lösbare Kopplung zu dem Flugzeug (10) mittels einer an der Hilfsvorrichtung (20) oder dem Flugzeug (10) angeordneten Kopplungseinrichtung (25) bewerkstelligt ist.

7. Hilfsvorrichtung nach einem der vorhergehenden Ansprüche, **dadurch gekennzeichnet, dass** deren Antrieb (21) eine an den Aufstieg in die vorbestimmte Höhe angepasste Leistung aufweist.

## Claims

1. An auxiliary device for a high-altitude airplane (10), wherein the auxiliary device comprises a drive (21) which is independent from the airplane (10) and releasable from the airplane (10) at the latest upon reaching a predetermined mission altitude, and
wherein the drive (21) is a combustion motor and a fuel required for operation is stored in a reservoir (22a) of the auxiliary device (20); or
wherein the drive (21) comprises an electric motor being supplied from an energy storage mechanism (22b) of the auxiliary device (20);
**characterized in that** the independent drive (21) is adapted for the ascent of the airplane (10) that is releasably coupled to the auxiliary device (20) into the stratosphere.

2. The auxiliary device according to claim 1, **characterized in that** the auxiliary device is arranged on and/or beneath the airplane.

3. The auxiliary device according to claim 1, **characterized in that** it comprises means (23) for stabilizing a flight position in the ascent into the stratosphere, in particular one or more controllable wing(s) and/or a controllable auxiliary drive and/or or a direction-changing device for the drive (21).

4. The auxiliary device according any one of the preceding claims, **characterized in that** it is reusable.

5. The auxiliary device according any one of the preceding claims, **characterized in that** it comprises an uncontrolled parachute or a controlled parasail or controllable wings.

6. The auxiliary device according any one of the preceding claims, **characterized in that** the releasable coupling to the airplane (10) is realized by means of a coupling device (25) arranged on the auxiliary device (20) or the airplane (10).

7. The auxiliary device according any one of the preceding claims, **characterized in that** its drive (21) has a power adapted to the ascent to the predetermined altitude.

## Revendications

1. Dispositif auxiliaire pour aéronef (10) volant à haute altitude, ce dispositif auxiliaire comportant un dispositif de propulsion (21) indépendant de l'aéronef (10) et pouvant se détacher de l'aéronef (10) au plus tard à l'atteinte d'une hauteur de mission prédéterminée, et
le dispositif de propulsion (21) consistant en un moteur à combustion, et un carburant nécessaire au fonctionnement de celui-ci étant stocké dans un réservoir (22a) du dispositif auxiliaire (20) ; ou
le dispositif de propulsion (21) comportant un moteur électrique alimenté depuis un réservoir d'énergie (22b) du dispositif auxiliaire (22) ; **caractérisé en ce que** le dispositif de propulsion (21) indépendant est adapté pour l'ascension dans la stratosphère de l'aéronef (10) couplé de manière détachable au dispositif auxiliaire (20).

2. Dispositif auxiliaire selon la revendication 1, **caractérisé en ce que** le dispositif auxiliaire est disposé sur et/ou sous l'aéronef (10).

3. Dispositif auxiliaire selon l'une des revendications précédentes, **caractérisé en ce que** celui-ci comporte un moyen (23) servant à stabiliser la position de l'aéronef en vol lors de son ascension dans la stratosphère, plus particulièrement une ou plusieurs ailes pouvant être commandées et/ou un moteur auxiliaire pouvant être commandé et/ou un dispositif de changement de direction pour le dispositif de propulsion (21).

4. Dispositif auxiliaire selon l'une des revendications précédentes, **caractérisé en ce que** celui-ci est réutilisable.

5. Dispositif auxiliaire selon l'une des revendications précédentes, **caractérisé en ce que** celui-ci comporte un parachute non manoeuvrable ou un parasail manoeuvrable ou des ailes pouvant être commandées.

6. Dispositif auxiliaire selon l'une des revendications précédentes, **caractérisé en ce que** l'accouplement détachable à l'aéronef (10) est réalisé au moyen d'un dispositif d'accouplement (25) placé sur le dispositif auxiliaire (20) ou sur l'aéronef (10).

7. Dispositif auxiliaire selon l'une des revendications précédentes, **caractérisé en ce que** le dispositif de propulsion (21) dont il est équipé présente une puissance appropriée pour l'ascension à une hauteur prédéterminée.
